# EUROPEAN PATENT APPLICATION

(11) **EP 1 724 674 A2**
(43) Date of publication of application: **22.11.2006**
(21) Application number: 06252508.4
(22) Date of filing: 12.05.2006
(51) Int. Cl.: G06F 3/12

(54) **Terminal apparatus, printing apparatus, printing system, information processing method, and recording medium**

(30) Priority: 12.05.2005 JP 2005140184
(71) Applicant: Ricoh Company, Ltd., Tokyo 143-8555 (JP)
(72) Inventor: Hiroshi, Hinohara, Kawasaki-shi Kanagawa (JP)
(74) Representative: Leeming, John Gerard

(57) **Abstract**

A terminal apparatus (111) in a printing system (101) where the terminal apparatus (111) generates printing request data and writes the printing request data into a storage medium (131); and a printing apparatus (112) reads the printing request data from the storage medium (131) and performs printing in accordance with the printing request data is disclosed. The terminal apparatus (111) includes printing request generation means (201) for generating the printing request data; printing request writing means (202) for writing the printing request data into the storage medium (131); monitoring means (203) for monitoring writing into the storage medium (131); and display means (204) for displaying a screen on the terminal apparatus (111). When the monitoring means (203) detects writing to the effect that the reading of the printing request data is completed, the display means (204) displays the screen to the effect that the reading of the printing request data is completed.

## Description

### 1. Field of the Invention

The present invention relates to terminal apparatuses such as a cellular phone terminal, a personal digital assistant, and a PC (personal computer) terminal; printing apparatuses such as a printer, a copier, and a multifunction machine; printing systems; information processing methods; and recording media such as a CD-ROM.

Japanese Laid-Open Patent Application No. 2002-149549 (hereinafter Patent Document 1), Japanese Laid-Open Patent Application No. 2004-157992 (hereinafter Patent Document 2), and Japanese Laid-Open Patent Application No. 2004-242164 (hereinafter Patent Document 3) disclose printing systems where a document displayed on the screen of a portable terminal is printed on a printer.

According to the printing system disclosed in Patent Document 1, a reservation number is provided to a portable terminal when a request to print a content server's document viewed on the portable terminal is issued, and the document is printed on a printer when the reservation number is input to the printer through its operations panel.

According to the printing system disclosed in Patent Document 2, a reservation number is provided to a portable terminal when a request to print a content server's document viewed on the portable terminal is issued, and the document is printed on a printer when the reservation number is transmitted to the printer by Bluetooth (registered trademark).

According to the printing system disclosed in Patent Document 3, a two-dimensional code is provided to a portable terminal when image data of an image server is selected on the portable terminal, and the image data is printed on a printer when the printer reads the two-dimensional code.

The systems disclosed in the above-described documents have the disadvantage of operational complexity. According to the system disclosed in Patent Document 1, the operation of issuing a printing request and the operation of inputting the reservation number are performed on the portable terminal, thus resulting in double work to complicate operations. According to the system disclosed in Patent Document 2, it is necessary to take the step of transmitting the reservation number by Bluetooth (registered trademark) after issuing a printing request, thus complicating operations. According to the system disclosed in Patent Document 3, a selecting operation is performed on the portable terminal and the two-dimensional code is read by the printer, thus resulting in double work to complicate operations.

Accordingly, embodiments of the present invention may solve or reduce the above-described disadvantage.

According to one aspect of the present invention, a printing system in which the operational work load on an operator at the time of printing is reduced is provided as a printing system including a terminal apparatus such as a portable terminal and a printing apparatus such as a printer.

According to one aspect of the present invention, there is provided a terminal apparatus suitable for the above-described printing system.

According to one aspect of the present invention, there is provided an information processing method suitably executable by the above-described terminal apparatus.

According to one aspect of the present invention, there is provided a computer-readable recording medium having the above-described information processing method recorded thereon.

According to one aspect of the present invention, there is provided a printing apparatus suitable for the above-described printing system.

According to one aspect of the present invention, there is provided an information processing method suitably executable by the above-described printing apparatus.

According to one aspect of the present invention, there is provided a computer-readable recording medium having the above-described information processing method recorded thereon.

In a preferred embodiment of the present invention, there is provided a terminal apparatus
in a printing system where the terminal apparatus generates printing request data and writes the printing request data into a storage medium ; and a printing apparatus reads the printing request data from the storage medium
and performs printing in accordance with the printing request data, the terminal apparatus including: printing request generation means for generating the printing request data; printing request writing means for writing the printing request data into the storage medium ; monitoring means for monitoring writing into the storage medium ; and display means for displaying a screen on the terminal apparatus , wherein when the monitoring means detects writing to an effect that the reading of the printing request data is completed, the display means displays the screen to an effect that the reading of the printing request data is completed.

In a preferred embodiment of the present invention, there is provided an information processing method executed by a terminal apparatus
in a printing system where the terminal apparatus generates printing request data and writes the printing request data into a storage medium ; and a printing apparatus reads the printing request data from the storage medium
and performs printing in accordance with the printing request data, the information processing method including the steps of: (a) generating the printing request data; (b) writing the printing request data into the storage medium ; (c) monitoring writing into the storage medium ; and (d) displaying a screen on the terminal apparatus
, wherein when step (c) detects writing to an effect that the reading of the printing request data is completed, step (d) displays the screen to an effect that the reading of the printing request data is completed.

In a preferred embodiment of the present invention, there is provided a printing apparatus
in a printing system where a terminal apparatus generates printing request data and writes the printing request data into a storage medium ; and the printing apparatus reads the printing request data from the storage medium
and performs printing in accordance with the printing request data, the printing apparatus including: information reading means for reading information from the storage medium ; information writing means for writing information into the storage medium ; and printing means for performing the printing in accordance with the printing request data, wherein when the information reading means has read the printing request data from the storage medium , the information writing means performs writing into the storage medium to an effect that the reading of the printing request data is completed.

In a preferred embodiment of the present invention, there is provided an information processing method executed by a printing apparatus
in a printing system where a terminal apparatus generates printing request data and writes the printing request data into a storage medium ; and the printing apparatus reads the printing request data from the storage medium
and performs printing in accordance with the printing request data, the information processing method including the steps of: (a) reading information from the storage medium ; (b) writing information into the storage medium ; and (c) performing the printing in accordance with the printing request data, wherein when step (a) has read the printing request data from the storage medium step (b) performs writing into the storage medium to an effect that the reading of the printing request data is completed.

In a preferred embodiment of the present invention, there is provided a printing system including the above-described terminal apparatus and the above-described printing apparatus.

In a preferred embodiment of the present invention, there is provided a computer-readable recording medium on which is recorded a program for causing a computer to execute at least one of the above-described information processing methods.

Other objects, features and advantages of the present invention will become more apparent from the following detailed description of exemplary embodiments and the accompanying drawings, in which:
FIG. 1 is a diagram showing a printing system according to a first embodiment of the present invention;
FIG. 2 is a sequence diagram showing printing executed in the printing system according to the first embodiment of the present invention;
FIG. 3 is a diagram showing a document selection screen according to the first embodiment of the present invention;
FIG. 4 is a diagram for illustrating a method of providing the URL of a document to be printed according to the first embodiment of the present invention;
FIG. 5 is a diagram showing a screen display of a message that reading of printing request data is completed according to the first embodiment of the present invention;
FIG. 6 is a diagram showing a screen for setting printing conditions according to the first embodiment of the present invention;
FIG. 7 is a diagram showing a screen display of a message to bring a cellular phone terminal close to a printer according to the first embodiment of the present invention;
FIG. 8 is a functional block diagram showing the cellular phone terminal according to the first embodiment of the present invention;
FIG. 9 is a functional block diagram showing the printer according to the first embodiment of the present invention;
FIG. 10 is a diagram showing the printing system according to a second embodiment of the present invention;
FIG. 11 is a diagram for illustrating a method of utilizing an RFID chip according to the second embodiment of the present invention;
FIG. 12 is a flowchart showing a dividing operation by the cellular phone terminal according to the second embodiment of the present invention; and
FIG. 13 is a flowchart showing a connecting operation by the printer according to the second embodiment of the present invention.

A description is given below, with reference to the accompanying drawings, of embodiments of the present invention.

### [First Embodiment]

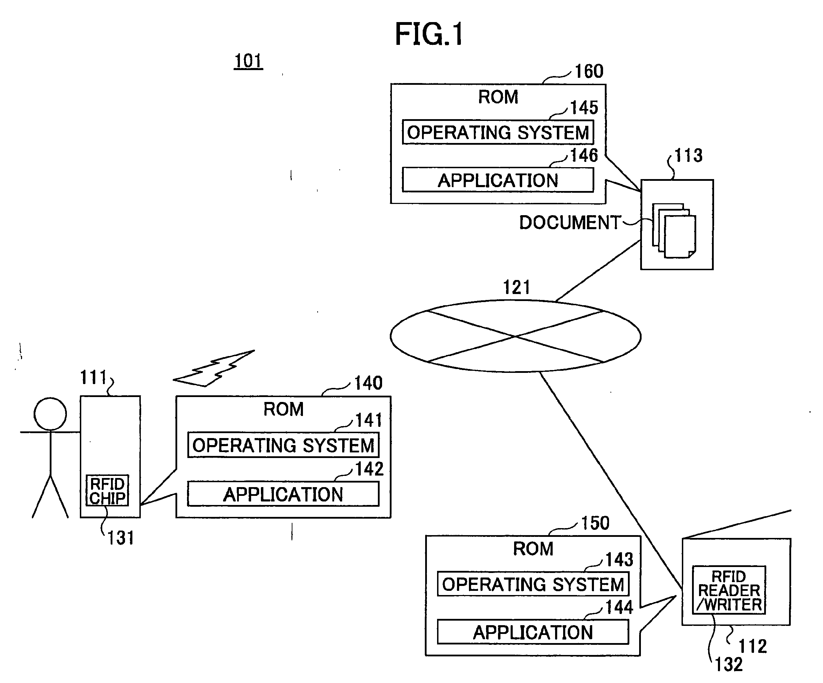

FIG. 1 is a diagram showing a printing system 101 according to a first embodiment of the present invention. The printing system 101 of FIG. 1 includes a cellular phone terminal 111, a printer 112, and a Web server 113. In the printing system 101, the cellular phone terminal 111 is connected wirelessly (for example, by radio) to a network 121, the printer 112 is wired to the network 121, and the Web server 113 is wired to the network 121.

The cellular phone terminal 111 includes an RFID (Radio Frequency Identification) chip 131. Accordingly, the cellular phone terminal 111 can write information into or read information from the RFID chip 131. The printer 112 includes an RFID reader/writer 132. Accordingly, if the cellular phone terminal 111 is close to the printer 112, the printer 112 can write information into or read information from the RFID chip 131. The RFID chip 131 may be built in the cellular phone terminal 111 as an RFID tag or inserted into the cellular phone terminal 111 as an RFID card.

There is a document to be printed in the Web server 113. The location of the document to be printed is given by a URL (Universal Resource Locator). According to the printing system 101, the cellular phone terminal 111 generates data on a request to print the document (printing request data) and writes the printing request data into the RFID chip 131, and the printer 112 reads the printing request data from the RFID chip 131 and prints the document in accordance with the printing request data.

As shown in FIG. 1, an operating system 141 and an application 142 for requesting printing are stored in a ROM 140 of the cellular phone terminal 111. Further, an operating system 143 and an application 144 for printing are stored in a ROM 150 of the printer 112. Further, an operating system 145 and an application 146 for a Web server are stored in a ROM 160 (or an HDD) of the Web server 113. Printing is executed by these applications 142, 144, and 146 in the printing system 101.

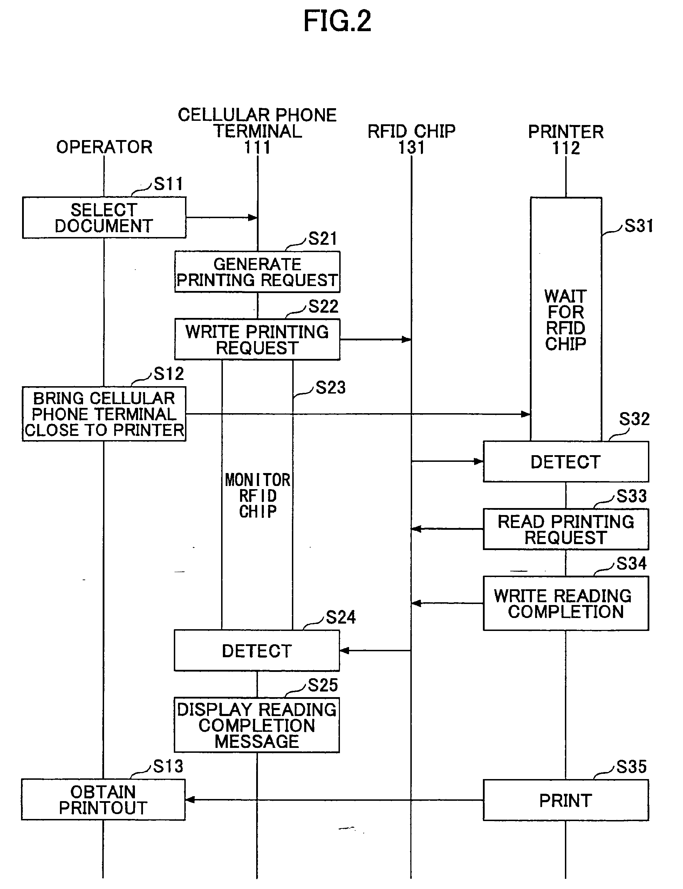

FIG. 2 is a sequence diagram showing printing executed in the printing system 101 according to the first embodiment.

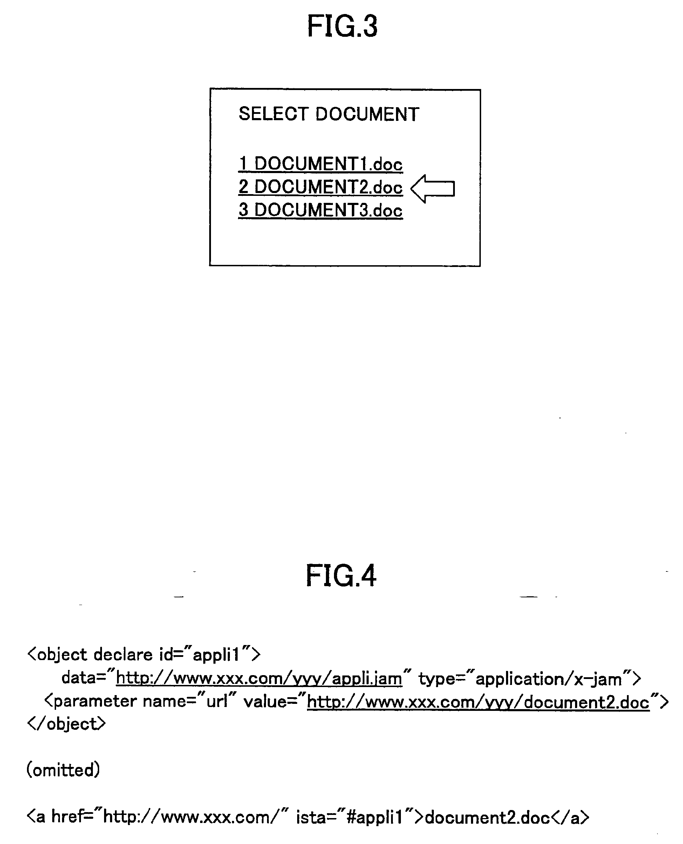

First, a document selection screen (FIG. 3) for selecting a document in the Web server 113 is displayed on the display screen of the cellular phone terminal 111. When a document to be printed is selected on the document selection screen in step S11, the application 142 of the cellular phone terminal 111 is activated so that the URL of the document is provided to the application 142 of the cellular phone terminal 111. Here, the URL of the document is provided as the description of a <parameter> tag that is the child element of an <object> tag based on the parameter provision method at a browser start time of i-appli (registered trademark) of NTT DoCoMo, Inc (see FIG. 4).

Next, in step S21, the application 142 of the cellular phone terminal 111 generates printing request data for requesting to print the document. In step S22, the application 142 of the cellular phone terminal 111 writes the printing request data into the RFID chip 131, and in step S23, monitors writing into the RFID chip 131. The printing request data may contain the document to be printed or the URL of the document to be printed. Here, the monitoring of writing into the RFID chip 131 is performed by repeating reading from the RFID chip 131 at regular intervals (for example, every five seconds).

Then, in step S31, the RFID reader/writer 132 in the printer 112 waits for the RFID chip 131. When an operator brings the cellular phone terminal 111 close to the printer 112 in step S12, in step S32, the RFID reader/writer 132 detects the approach of the RFID chip 131, and in step S33, reads information from the RFID chip 131. In step S34, reading the printing request data from the RFID chip 131, the RFID reader/writer 132 performs writing into the RFID chip 131 to the effect that reading of the printing request data is completed. In step S35, the printer 112 prints the above-described document in accordance with the printing request data. A print server may be relied on for control of printing of the printer 112. In this case, the URL of the print server used by the printer 112 may be obtained from an external apparatus to the printer 112 or stored inside the printer 112. In step S13 after step S35, the operator obtains the printed document.

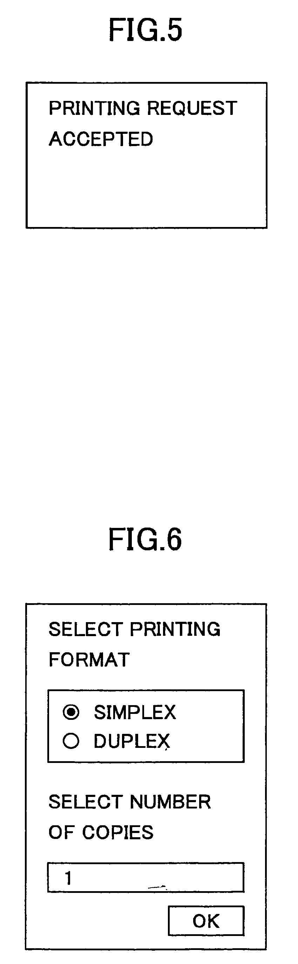

In step S24, the application 142 of the cellular phone terminal 111 detects from the RFID chip 131 the writing to the effect that reading of the printing request data is completed. Then, in step S25, the application 142 of the cellular phone terminal 111 displays on the screen (FIG. 5) "PRINTING REQUEST ACCEPTED," a message that reading of the printing request data is completed.

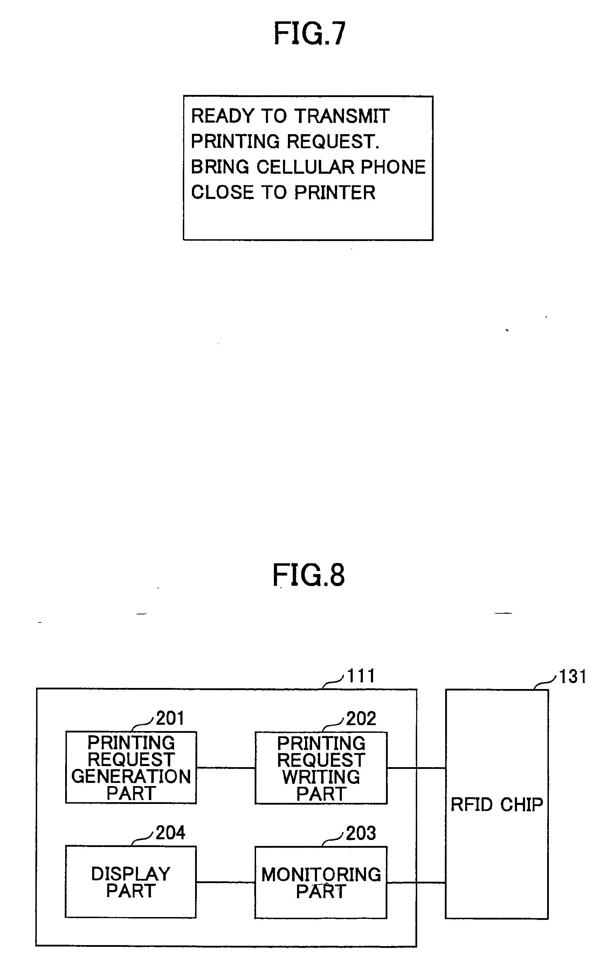

Between selecting a document to be printed in step S11 and bringing the cellular phone terminal 111 close to the printer 112 in step S12, the operator is able to use a screen for setting printing conditions for the document (see FIG. 6). When printing conditions for the document are set on the setting screen, the application 142 of the cellular phone terminal 111 changes the printing request data of the document in step S21, rewrites the printing request data into the RFID chip 131 in step S22, and displays a message to bring the cellular phone terminal 111 close to the printer 112 (see FIG. 7).

According to the first embodiment, the operational work load on the operator at the time of printing is reduced by allowing information such as printing request data to be exchanged between the cellular phone terminal 111 and the printer 112 using the RFID chip 131 and the RFID reader/writer 132. According to the first embodiment, information such as printing request data is exchanged between the cellular phone terminal 111 and the printer 112 by bringing the cellular phone terminal 111 and the printer 112 close to each other.

According to the first embodiment, when the printer 112 reads printing request data from the RFID chip 131, the printer 112 performs writing into the RFID chip 131 to the effect that reading of the printing request data is completed. When the cellular phone terminal 111 detects from the RFID chip 131 the writing to the effect that reading of the printing request data is completed, the cellular phone terminal 111 displays on the screen a message that reading of the printing request data is completed. This relieves the operator of the necessity to keep the cellular phone terminal 111 and the printer 112 close to each other until completion of printing in step S35. That is, the operator has only to keep the cellular phone terminal 111 and the printer 112 close to each other until the screen is displayed in step S25. This further reduces the operational work load on the operator at the time of printing.

According to the first embodiment, a storage medium other than the RFID chip 131 and a reading and writing apparatus other than the RFID reader/writer 132 may also be employed in place of the RFID chip 131 and the RFID reader/writer 132. For example, a flash memory and a flash memory reader/writer may be employed.

A description is given below of a method of generating printing request data in step S21.

The application 142 of the cellular phone terminal 111 generates printing request data based on information obtained from an apparatus external to the cellular phone terminal 111. For example, the application 142 of the cellular phone terminal 111 may obtain a document to be printed from the Web server 113 and generate printing request data based on the document. Alternatively, for example, the application 142 of the cellular phone terminal 111 may obtain from the Web server 113 information for locating the document to be printed, such as the URL, filename, or file path name of the document to be printed, and generate printing request data based on the obtained information. In the former case, the document to be printed is provided from the cellular phone terminal 111 to the printer 112 as the printing request data. In the latter case, the document to be printed is provided from the Web server 113 to the printer 112.

Further, the application 142 of the cellular phone terminal 111 may generate printing request data based solely on information obtained from an apparatus external to the cellular phone terminal 111. Alternatively, the application 142 of the cellular phone terminal 111 may generate printing request data by adding supplementary information to information obtained from an apparatus external to the cellular phone terminal 111. In the former case, there is no need to prepare information on the cellular phone terminal 111 side. In the latter case, the information that does not need to be prepared on the Web server 113 side may be prepared on the cellular phone terminal 111 side.

A first specific example of the above-described supplementary information may be information entered on the display screen of the cellular phone terminal 111, such as authentication information entered on an authentication screen and information on the settings of printing conditions entered on the printing condition setting screen (FIG. 6). A second specific example of the above-described supplementary information may be information stored inside the cellular phone terminal 111, such as default authentication information and default printing condition setting information. According to the first specific example, it is possible to allow the operator to freely specify information to be contained in the printing request data. According to the second specific example, it is possible to save the operator the trouble of specifying information to be contained in the printing request data.

A description is given below of the printing system 101 of FIG. 1 in terms of functional blocks.

FIG. 8 is a functional block diagram showing the cellular phone terminal 111. The cellular phone terminal 111 includes functional blocks such as a printing request generation part 201, a printing request writing part 202, a monitoring part 203, and a display part 204.

The printing request generation part 201, which is a functional block to generate printing request data for a document to be printed, serves as the main executing body of the operation of step S21. The printing request writing part 202, which is a functional block to write the printing request data for the document to be printed into the RFID chip 131, serves as the main executing body of the operation of step S22. The monitoring part 203, which is a functional block to monitor writing into the RFID chip 131, serves as the main executing body of the operations of steps S23 and S24. The display part 204, which is a functional block to display a screen on the cellular phone terminal 111, serves as the main executing body of the operation of step S25.

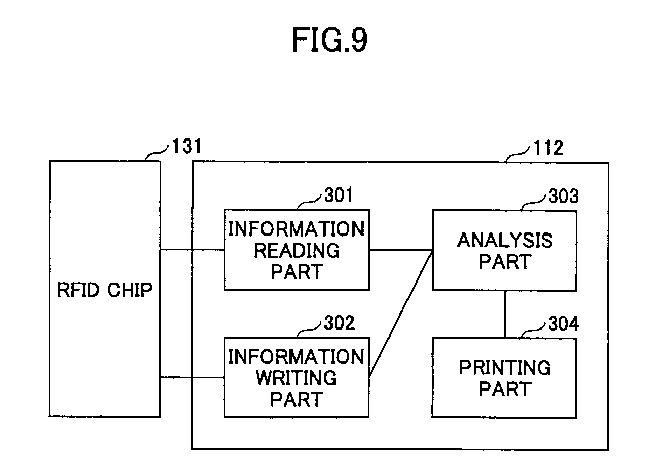

FIG. 9 is a functional block diagram showing the printer 112. The printer 112 includes functional blocks such as an information reading part 301, an information writing part 302, an analysis part 303, and a printing part 304.

The information reading part 301, which is a function block to read information from the RFID chip 131, serves as the main executing body of the operations of steps S31, S32, and S33. The information writing part 302, which is a functional block to write information to the RFID chip 131, serves as the main executing body of the operation of step S34. The analysis part 303 is a functional block to analyze printing request data. The printing part 304 is a functional block to execute document printing in accordance with the results of analysis of the printing request data. The analysis part 303 and the printing part 304 serve as the main executing body of the operation of step S35.

### [Second Embodiment]

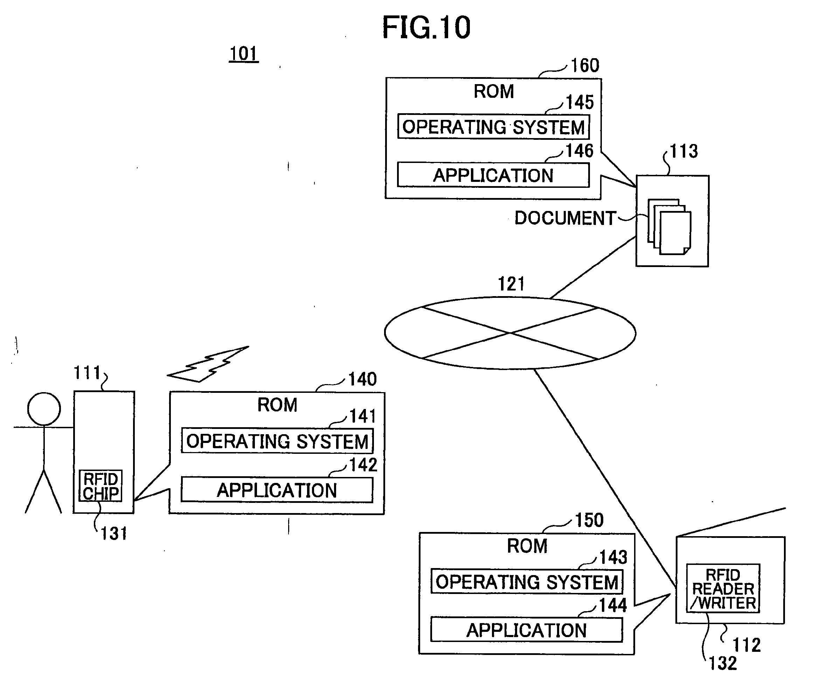

FIG. 10 is a diagram showing the printing system 101 according to a second embodiment of the present invention. In FIG. 10, the same elements as those described above are referred to by the same numerals. The printing system 101 of FIG. 10 includes the cellular phone terminal 111, the printer 112, and the Web server 113. In the printing system 101, the cellular phone terminal 111 is connected wirelessly (for example, by radio) to the network 121, the printer 112 is wired to the network 121, and the Web server 113 is wired to the network 121.

The second embodiment may correspond to a variation of the first embodiment. The description of the first embodiment also applies to the second embodiment. A description is given below of one or more differences between the first embodiment and the second embodiment.

According to the second embodiment, if the printing request data is too large in size to be stored in the RFID chip 131, the cellular phone terminal 111 (the printing request writing part 202) divides the printing request data into data pieces each sized to be storable in the RFID chip 131, and thereafter, writes these data pieces into the RFID chip 131 one by one.

According to the second embodiment, if the information read from the RFID chip 131 is a portion (piece) of the printing request data, the printer 112 (the information reading part 301) reads each portion of the printing request data from the RFID chip, and connects these portions.

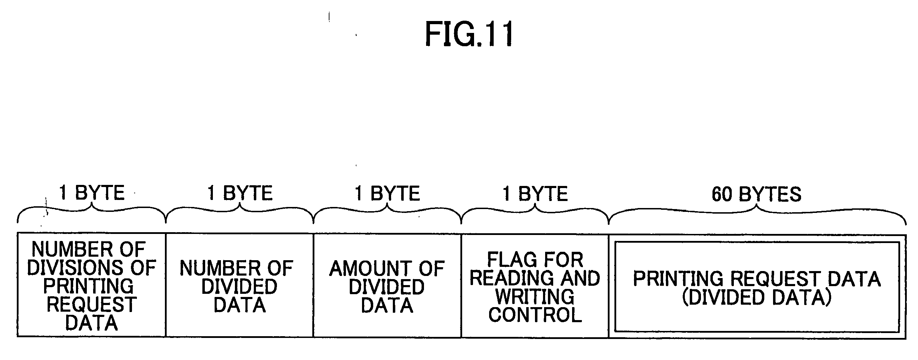

A description is given of the above with reference to FIG. 11. FIG. 11 is a diagram for illustrating a method of utilizing the RFID chip 131 according to this embodiment. The 64-byte storage area of the RFID chip 131 includes a front 4-byte storage area for data control and a rear 60-byte storage area for storing actual data. Accordingly, if the amount of printing request data exceeds 60 bytes, the above-described dividing operation and connecting operation are performed. For example, if the amount of printing request data is 150 bytes, the 150-byte printing request data are divided into data (divided data) of 60 bytes, 60 bytes, and 30 bytes at the time of writing, and the data (divided data) of 60 bytes, 60 bytes, and 30 bytes are connected into the 150-byte printing request data at the time of reading.

The configuration of the 4 bytes for data control is as follows. The first byte indicates the number of divisions of the printing request data. The second byte indicates the number of the corresponding divided data. The third byte indicates the amount of the corresponding divided data. The fourth byte is a flag for reading and writing control.

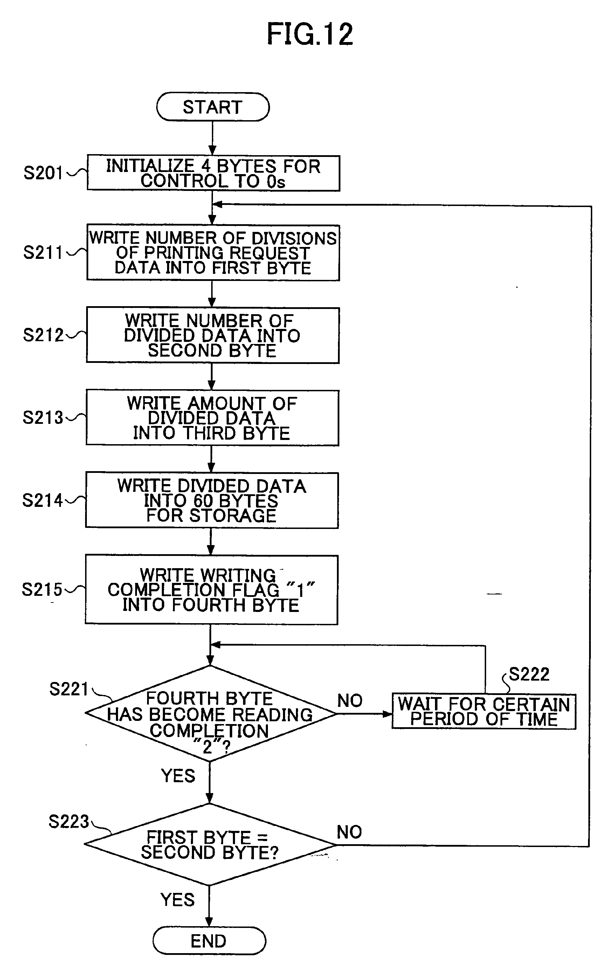

FIG. 12 is a flowchart showing a dividing operation by the cellular phone terminal 111 according to this embodiment. The flow of FIG. 12 corresponds to the operation of step S22 of FIG. 2. FIG. 12 should be referred to for step numbers in the 200s.

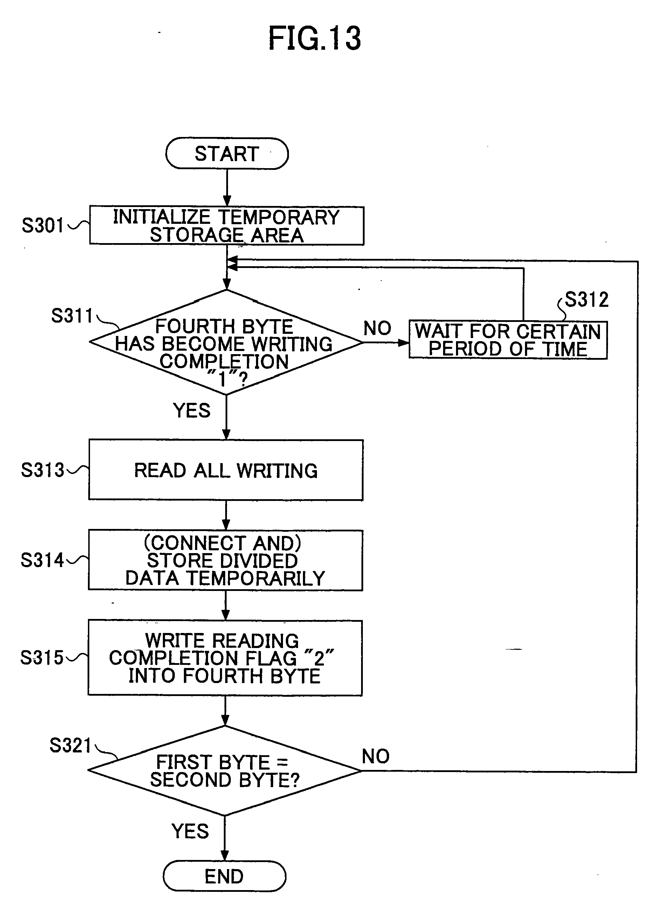

FIG. 13 is a flowchart showing a connecting operation by the printer 112 according to this embodiment. The flow of FIG. 13 corresponds to the operation of step S33 of FIG. 2. FIG. 13 should be referred to for step numbers in the 300s.

First, the cellular phone terminal 111 generates 150-byte printing request data, and divides the 150-byte printing request data into divided data of 60 bytes, 60 bytes, and 30 bytes.

Next, in step S201 of FIG. 12, the cellular phone terminal 111 initializes the 4 bytes for data control to 0s, and starts the operation of writing the first divided data.

In the operation of writing the first divided data, first, in step S211, the cellular phone terminal 111 writes the number of divisions of the printing request data "3" into the first byte for data control. Next, in step S212, the cellular phone terminal 111 writes the number of the first divided data "1" into the second byte for data control. Next, in step S213, the cellular phone terminal 111 writes the amount of the first divided data "60" into the third byte for data control. Next, in step S214, the cellular phone terminal 111 starts writing the first divided data into the 60 bytes for storing actual data. Then, in step S215, the cellular phone terminal 111 writes a flag "1," indicating completion of writing the first divided data, into the fourth byte for data control.

Referring to FIG. 13, in step S301, the printer 112 initializes a temporary storage area. Then, in step S311, the printer 112 monitors the fourth byte for data control and determines whether the fourth byte for data control has become "1." If the fourth byte for data control is not "1" (NO in step S311), in step S312, the printer 112 waits for a certain period of time (for example, 0.1 seconds). If the fourth byte for data control is "1" (YES in step S311), in step S313, the printer 112 reads all the writing (written data). Then, in step S314, the printer 112 temporarily stores the first divided data, and in step S315, the printer 112 writes a flag "2," indicating completion of reading the first divided data, into the fourth byte for data control. Then, in step S321, the printer 112 determines whether the first byte and second byte for data control are equal. In this case, since the first byte and second byte for data control are not equal (NO in step S321), the printer 112 returns to step S311.

Referring back to FIG. 12, in step S221, the cellular phone terminal 111 monitors the fourth byte for data control and determines whether the fourth byte for data control has become "2." If the fourth byte for data control is not "2" (NO in step S221), in step S222, the cellular phone terminal 111 waits for a certain period of time (for example, 0.1 seconds). If the fourth byte for data control is "2" (YES in step S221), in step S223, the cellular phone terminal 111 determines whether the first byte and second byte for data control are equal. In this case, since the first byte and second byte for data control are not equal (NO in step S223), the cellular phone terminal 111 starts the operation of writing the second divided data.

In the operation of writing the second divided data, first, in step S211, the cellular phone terminal 111 writes the number of divisions of the printing request data "3" into the first byte for data control. Next, in step S212, the cellular phone terminal 111 writes the number of the second divided data "2" into the second byte for data control. Next, in step S213, the cellular phone terminal 111 writes the amount of the second divided data "60" into the third byte for data control. Next, in step S214, the cellular phone terminal 111 starts writing the second divided data into the 60 bytes for storing actual data. Then, in step S215, the cellular phone terminal 111 writes a flag "1," indicating completion of writing the second divided data, into the fourth byte for data control.

Referring to FIG. 13, in step S311, the printer 112 monitors the fourth byte for data control and determines whether the fourth byte for data control has become "1." If the fourth byte for data control is not "1" (NO in step S311), in step S312, the printer 112 waits for a certain period of time (for example, 0.1 seconds). If the fourth byte for data control is "1" (YES in step S311), in step S313, the printer 112 reads all the writing (written data). Then, in step S314, the printer 112 connects the second divided data to the first divided data, and temporarily stores the connected first and second divided data. Then, in step S315, the printer 112 writes a flag "2," indicating completion of reading the second divided data, into the fourth byte for data control. Then, in step S321, the printer 112 determines whether the first byte and second byte for data control are equal. In this case, since the first byte and second byte for data control are not equal (NO in step S321), the printer 112 returns to step S311.

Referring back to FIG. 12, in step S221, the cellular phone terminal 111 monitors the fourth byte for data control and determines whether the fourth byte for data control has become "2." If the fourth byte for data control is not "2" (NO in step S221), in step S222, the cellular phone terminal 111 waits for a certain period of time (for example, 0.1 seconds). If the fourth byte for data control is "2" (YES in step S221), in step S223, the cellular phone terminal 111 determines whether the first byte and second byte for data control are equal. In this case, since the first byte and second byte for data control are not equal (NO in step S223), the cellular phone terminal 111 starts the operation of writing the third divided data.

In the operation of writing the third divided data, first, in step S211, the cellular phone terminal 111 writes the number of divisions of the printing request data "3" into the first byte for data control. Next, in step S212, the cellular phone terminal 111 writes the number of the third divided data "3" into the second byte for data control. Next, in step S213, the cellular phone terminal 111 writes the amount of the third divided data "30" into the third byte for data control. Next, in step S214, the cellular phone terminal 111 starts writing the third divided data into the 60 bytes for storing actual data. Then, in step S215, the cellular phone terminal 111 writes a flag "1," indicating completion of writing the third divided data, into the fourth byte for data control.

Referring to FIG. 13, in step S311, the printer 112 monitors the fourth byte for data control and determines whether the fourth byte for data control has become "1." If the fourth byte for data control is not "1" (NO in step S311), in step S312, the printer 112 waits for a certain period of time (for example, 0.1 seconds). If the fourth byte for data control is "1" (YES in step S311), in step S313, the printer 112 reads all the writing (written data). Then, in step S314, the printer 112 connects the third divided data to the first and second divided data, and temporarily stores the connected first, second, and third divided data. Then, in step S315, the printer 112 writes a flag "2," indicating completion of reading the third divided data, into the fourth byte for data control.

In step S321, the printer 112 determines whether the first byte and second byte for data control are equal. At this point, since the first byte and second byte for data control are equal (YES in step S321), the printer 112 determines that reading of all the divided data is completed. Then, the printer 112 analyzes the printing request data, and prints a document in accordance with the results of analysis of the printing request data.

Referring back to FIG. 12, in step S221, the cellular phone terminal 111 monitors the fourth byte for data control and determines whether the fourth byte for data control has become "2." If the fourth byte for data control is not "2" (NO in step S221), in step S222, the cellular phone terminal 111 waits for a certain period of time (for example, 0.1 seconds). If the fourth byte for data control is "2" (YES in step S221), in step S223, the cellular phone terminal 111 determines whether the first byte and second byte for data control are equal. At this point, since the first byte and second byte for data control are equal (YES in step S223), the cellular phone terminal 111 displays on the screen (FIG. 5) "PRINTING REQUEST ACCEPTED," a message that reading of the printing request data is completed.

According to the second embodiment, it is possible to perform printing without being restricted by the size of printing request data by performing the dividing operation and the connecting operation on the printing request data. For example, this is effective in the case where only a small storage area is available, such as the "free area" of "Osaifu-Keitai" (registered trademark), literally a wallet cellular phone or a cellular phone with a wallet function, of NTT DoCoMo, Inc.

According to the second embodiment, of the 64-byte storage area of the RFID chip 131 of the cellular phone terminal 111, the front 4 bytes are used for data control, and the rear 60 bytes are used for actual data storage. Alternatively, the front 60 bytes may be used for actual data storage, and the rear 4 bytes may be used for data control. According to the second embodiment, any data area configuration may be employed as the data area configuration of each of the storage area for data control and the storage area for actual data storage.

Further, according to the second embodiment, it is also possible, for example, to provide only the area for data storage instead of providing both the storage area for data control and the storage area for data storage. In this case, for example, data meaning the end of printing request data is written at the end of the printing request data.

According to one aspect of the present invention, a printing system in which the operational work load on an operator at the time of printing is reduced is provided as a printing system including a terminal apparatus such as a portable terminal and a printing apparatus such as a printer.

The present invention is not limited to the specifically disclosed embodiments, and variations and modifications may be made without departing from the scope of the present invention.

## Claims

1. A terminal apparatus (111) for use in a printing system (101) in which the terminal apparatus (111)
generates printing request data and writes the printing request data into a storage medium (131);
and a printing apparatus (112) reads the printing request data from the storage medium (131) and performs printing in accordance with the printing request data, the terminal apparatus (111) comprising:
printing request generation means (201) for generating the printing request data;
printing request writing means (202) for writing the printing request data into the storage medium (131);
monitoring means (203) for monitoring the storage medium (131) to detect the writing of the data therein: and
display means (204) for displaying a screen on the terminal apparatus (111),
wherein when said monitoring means (203) detects the writing of data to the effect that the reading of the printing request data is completed, said display means (204) displays a message to the effect that the reading of the printing request data is completed.

2. A terminal apparatus (111) according to claim 1,
wherein said printing
request generation means (201) generates the printing request data based on information obtained from outside the terminal apparatus (111).

3. A terminal apparatus (111) according to claim 2, wherein said printing
request generation means (201) generates the printing request data by adding supplementary information to the information obtained from outside the terminal apparatus (111).

4. A terminal apparatus (111) according to claim 3, wherein said printing request generation means (201) generates the printing request data based on the information obtained from outside the terminal apparatus (111) and information stored inside the terminal apparatus (111).

5. A terminal apparatus (111) according to any of claims 1 to 4, wherein
said printing request writing means (202) divides the printing request data into pieces each sized to be storable in the storage medium (131) and writes the pieces into the storage medium (131) if the printing request data is too large in size to be stored in the storage medium (131).

6. An information processing method executed by a terminal apparatus (111) in a printing system (101) where the terminal apparatus (111) generates printing request data and writes the printing request data into a storage medium (131); and a printing apparatus (112) reads the printing request data from the storage medium (131) and performs printing in accordance with the printing request data, the information processing method comprising the steps of:
(a) generating the printing request data;
(b) writing the printing request data into the storage medium (131);
(c) monitoring writing into the storage medium (131) to detect writing of data therein; and
(d) displaying a screen on the terminal apparatus (111),
wherein when said step (c) detects the writing of data to the effect that the reading of the printing request data is completed, said step (d) displays the screen to an effect that the reading of the printing request data is completed.

7. A printing apparatus (112) for use in a printing system (101) where a terminal apparatus (111) generates printing request data and writes the printing request data into a storage medium (131); and the printing apparatus (112) reads the printing request data from the storage medium (131) and performs printing in accordance with the printing request data, the printing apparatus (112) comprising:
information reading means (301) for reading information from the storage medium (131);
information writing means (302) for writing information into the storage medium (131); and
printing means (304) for performing the printing in accordance with the printing request data,
wherein when said information reading means (301) has read the printing request data from the storage medium (131), said information writing means (302) writes into the storage medium (131) data
to the effect that the reading of the printing request data is completed.

8. The printing apparatus (112) as claimed in claim 7, wherein if the information
read from the storage medium (131) is one of a plurality of portions of the printing request data, said information reading means (301) reads each of the portions of the printing request data from the storage medium (131) and connects the portions.

9. An information processing method executed by a printing apparatus (112) in a printing system (101) where a terminal apparatus (111) generates printing request data and writes the printing request data into a storage medium (131); and the printing apparatus (112) reads the printing request data from the storage medium (131) and performs printing in accordance with the printing request data, the information processing method comprising the steps of:
(a) reading information from the storage medium (131);
(b) writing information into the storage medium (131); and
(c) performing the printing in accordance with the printing request data,
wherein when said step (a) has read the printing request data from the storage medium (131), said step (b) writes into the storage medium (131) data to the effect that the reading of the printing request data is completed.

10. A printing system, comprising:
a terminal apparatus according to any of claims 1 to 5; and
a printing apparatus according to claim 7 or 8 .

11. A computer comprising program code means that, when executed by a computer system instructs the computer system to execute an information processing method according to claim 6 or 9.
